# EUROPEAN PATENT APPLICATION

(11) **EP 2 254 030 A1**
(43) Date of publication of application: **24.11.2010**
(21) Application number: 09719843.6
(22) Date of filing: 22.01.2009
(51) Int. Cl.: G06F 3/042, G02F 1/1333, G06F 3/041

(54) **AREA SENSOR AND DISPLAY DEVICE HAVING AREA SENSOR**

(30) Priority: 14.03.2008 JP 2008066589; 08.05.2008 JP 2008122676
(71) Applicant: Sharp Kabushiki Kaisha, Osaka-shi, Osaka 545-8522 (JP)
(72) Inventor: MIYAZAKI, Shinichi, Osaka 545-8522 (JP); HOHSHI, Norikazu, Osaka 545-8522 (JP); WADA, Masakazu, Osaka 545-8522 (JP); TAKAHAMA, Kengo, Osaka 545-8522 (JP); NAKAGAWA, Toshiaki, Osaka 545-8522 (JP)
(74) Representative: Müller - Hoffmann & Partner
(86) International application number: PCT/JP2009/050993
(87) International publication number: WO 2009/113330

(57) **Abstract**

A liquid crystal display device (100) (display device) of the present invention includes a liquid crystal panel (20) including a liquid crystal layer (23) between an active matrix substrate (21) and a counter substrate (22). The liquid crystal display device (100) has an area sensor function that detects an input position of an external input by detecting an image on a surface (100a) (target surface for detection) of the liquid crystal panel (20). The liquid crystal display device (100) includes: the liquid crystal panel (20) (position detecting section) including a plurality of optical sensor elements (30) detecting an intensity of light received, the liquid crystal panel (20) detecting the input position by causing the plurality of optical sensor elements to detect the image on the surface of the liquid crystal panel; and a reflectance changing section (45) changing a reflectance of light in response to application of pressure onto the surface (100a) of the liquid crystal panel (20).

## Description

### Technical Field

The present invention relates to an area sensor that includes optical sensor elements so as to detect a position of an external input, and a display device including such an area sensor.

### Background Art

Among display devices such as liquid crystal display devices, there has been developed a touch-panel-integrated display device including a touch panel (area sensor) function. The touch panel function allows detecting a touched position when a panel surface is touched with an input pen.

Conventional touch-panel-integrated display devices are typically either a resistive type (a system in which an input position is detected as a result of a contact, caused by a press, between an upper conductive substrate and a lower conductive substrate) or an electrostatic capacitive type (a system in which an input position is detected by detecting a change in a capacitance at a touched position).

In recent years, there has been a progress in development of a liquid crystal display device including an optical sensor element, such as a photodiode and/or a phototransistor, in each pixel (or for each pixel group including a plurality of pixels) in an image display area (see Patent Document 1, for example). Because each pixel includes an optical sensor element as described above, a function of an area sensor (specifically, a scanner function, a touch panel function, etc.) can be attained in a typical liquid crystal display device. In other words, by causing the optical sensor elements as an area sensor, it is possible to attain a touch-panel (or a scanner) integrated display device.

### Citation List

Patent Literature 1
   Japanese Patent Application Publication, Tokukai, No. 2006-18219 A (Publication Date: January 19, 2006)
Patent Literature 2
   Japanese Patent Application Publication, Tokukai, No. 2001-67180 A (Publication Date: March 16, 2001)

### Summary of Invention

When a liquid crystal display device including optical sensor elements as described above is used as a display device having a touch panel function, the optical sensor elements takes, as an image, a pen or a finger that is reflected on a display panel so that a position is detected by detecting a position of a tip of the pen or a tip of the finger.

When a finger or a pen is used for input through a touch panel into such a liquid crystal display device including a touch panel function, an intensity of light received by the optical elements included in the liquid crystal display device does not significantly vary depending upon whether or not the tip of the finger or pen is touches the display panel. Therefore, it is difficult to precisely distinguish whether or not a pen or a finger is touches the display panel.

Such a problem in that it is difficult to distinguish whether or not the display panel is being touched occurs not only in an area sensor included in a display device but also in an area sensor that utilizes an optical sensor element (e.g. an optical pointing input device described in Patent Document 2, or the like).

The present invention is attained in view of the above problem. An object of present invention is to provide an area sensor capable of precisely distinguishing whether or not a finger or an input pen is touches a panel surface, and a display device including such an area sensor.

In order to solve the problem described above, an area sensor of the present invention detecting an input position of an external input by detecting an image on a target surface for detection, the area sensor includes: a position detecting section including a plurality of optical sensor elements detecting an intensity of light received, the position detecting section detecting the input position by causing the plurality of optical sensor elements to detect the image on the target surface for detection; and a reflectance changing section changing a reflectance of light in response to application of pressure onto the target surface for detection.

According to the above configuration, because the reflectance changing section is provided, it is possible to change the reflectance of the light that enters the position detecting section from a backside (an opposite side to the target surface for detection) of the position detecting section, depending on whether or not pressure is applied on the target surface for detection. This makes it possible to precisely distinguish whether or not a finger, an input pen, or the like touches the target surface for detection.

In the area sensor of the present invention, the reflectance changing section may lower the reflectance in response to the application of the pressure.

According to the configuration, when a finger, an input pen or the like touches the target surface for detection and pressure is applied on the target surface, the reflectance at a position of contact lowers. This reduces reflected light intensity on optical sensor elements provided in a position corresponding to the position of contact, as compared to optical sensor elements provided in other positions. Therefore, as compared to other positions, the image on the target surface for detection is detected as a darker image in the position where pressure is applied. This makes it possible to reliably distinguish whether or not a finger or an input pen touches the target surface for detection.

In the area sensor of the present invention, the reflectance changing section may be formed by using a lamination layer including an elastic film and a transparent flat plate substrate.

The above configuration makes it possible to attain a reflectance changing section lowering a reflectance in response to application of pressure. The above elastic film may be a film made of silicon rubber or the like. A material of the transparent substrate is not specifically limited as long as the material is a hard substrate that transmits light. Specific examples of such a material are acryl, diamond, and silicon dioxide.

In the area sensor of the present invention, the elastic film may include protrusions and depressions formed on a surface of the elastic film, the surface being to come in contact with the transparent flat plate substrate.

According to the configuration described above, when no pressure is applied on the target surface for detection, an air layer is formed between the elastic film and the transparent substrate. This causes interface reflection of light at an interface between the transparent substrate and the air layer and at an interface between the air layer and the elastic film. This makes it possible to improve the reflectance of the light. Meanwhile, in a case where pressure is applied on the target surface for detection, the interface is reduced due to a contact between the elastic film and the transparent substrate. As a result, it becomes possible to lower the reflectance of the light.

Moreover, because the protrusions and depressions are formed on the surface in contact, it is possible in a case where no pressure is applied on the panel surface to further improve the reflectance of the light in the reflectance changing section as well as improving the interface reflection. Meanwhile, because the protrusions and depressions are formed on the surface in contact, it is possible in a case where pressure is applied to the panel surface to further lower the reflectance of the light in the reflectance changing section as well as reducing the interface reflection.

Further, because the protrusions and depressions are formed on the surface in contact, an air layer is partially formed in a case where the elastic film and the transparent substrate come into contact with each other due to application of pressure by use of a finger, an input pen, or the like on the target surface for detection. This makes it possible to improve detachability between the elastic film and the transparent substrate at the time when pressure is removed. As a result, it is possible to prevent a situation in which the elastic film and the transparent substrate stay stuck to each other after completion of an input into the area sensor.

In the area sensor of the present invention, the elastic film may include protrusions and depressions formed on a surface of the elastic film, the surface being opposite to another surface of the elastic film to come in contact with the transparent flat plate substrate.

According to the above configuration, it is possible to attain a reflectance changing section that lowers the reflectance in response to application of pressure.

The area sensor of the present invention may further include: a light emitting section illuminating the position detecting section from a backside of the position detecting section.

In the above configuration, "the light emitting section illuminating the position detecting section from a backside of the position detecting section" means to illuminate the position detecting section from a side of the position detecting section opposite to the target surface for detection. According to the above configuration, depending on whether or not pressure is applied on the target surface for detection, the reflectance of the light from the light emitting section can be changed.

A display device of the present invention includes a display panel including any one of the above area sensors.

The above configuration includes any one of the area sensors described above. This makes it possible to attain a display device having an area sensor function capable of reliably distinguishing whether or not a finger or an input pen touches the target surface for detection.

In a case where the display device is a liquid crystal display device, a backlight serves as the light emitting section of the area sensor. Further, in a case where the display device is an electroluminescence (EL) display device, an EL layer serves as the light emitting section of the area sensor.

In addition, the optical sensor elements provided in the position detecting section of the area sensor may be monolithically formed with switching elements formed on an active matrix substrate of the display panel.

In order to solve the problem above, a liquid crystal display device of the present invention including a liquid crystal panel provided with a liquid crystal layer between an active matrix substrate and a counter substrate, the liquid crystal display device having an area sensor function for detecting an input position of an external input by detecting an image on a surface of the liquid crystal panel, the liquid crystal display device includes: a position detecting section including a plurality of optical sensor elements detecting an intensity of light received, the position detecting section detecting the input position by causing the plurality of optical sensor elements to detect the image on the surface of the liquid crystal panel; and a reflectance changing section changing a reflectance of light in response to application of pressure onto the surface of the liquid crystal panel.

According to the above configuration, because the reflectance changing section is provided, the reflectance of the light can be changed depending on whether or not pressure is applied on the panel surface. This makes it possible to precisely distinguish whether or not a finger, an input pen, or the like touches the panel surface.

The liquid crystal display device of the present invention may be configured to further include: a backlight illuminating the liquid crystal panel, wherein the reflectance changing section changes a reflectance of light from the backlight.

According to the above configuration, the reflectance of the light from the backlight can be changed depending on whether or not pressure is applied on the panel surface.

In the liquid crystal display device of the present invention, the reflectance changing section may lower the reflectance in response to the application of the pressure.

According to the configuration, when a finger, an input pen, or the like touches the panel surface and pressures is applied on the panel surface, the reflectance at a position of contact lowers. This decreases an intensity of light that comes from the light emitting section and that is reflected on optical sensor elements provided in a position corresponding to the position of contact, as compared to optical sensor elements provided in other positions. Therefore, as compared to other positions, the image on the panel surface is detected as a darker image in the position where pressure is applied. This makes it possible to reliably distinguish whether or not a finger or an input pen touches the panel surface.

In the liquid crystal display device of the present invention, the liquid crystal panel is provided between two polarizing plates disposed so as to be opposed to each other; the reflectance changing section is formed by using a laminated layer including an elastic film and one of the two polarizing plates, the one polarizing plate being provided on an image display surface side; and the elastic film is disposed between the liquid crystal panel and the one polarizing plate.

There is a case where the backlight provided on a backside of the optical sensor elements is used as a light source and the image on the panel surface is detected by use of reflected light from an object on the panel surface. In such a case, an intensity of the reflected light lowers when the display device displays a dark image such as a black display. Consequently, this causes deterioration in detection sensitivity of an optical sensor.

According to the above configuration, because the elastic film is provided on an inward side of the polarizing plate that is provided on the image display surface side, an intensity of light that reaches the elastic film from the backlight becomes constant regardless of brightness of an image displayed on the liquid crystal panel. In other words, the intensity of the light that is from the backlight and whose reflectance is changed by the reflectance changing section does not vary depending on a display of the liquid crystal panel. Therefore, even in a case where the image displayed on the liquid crystal panel is a dark image such as a black display, the intensity of light detected by the optical sensor elements is not decreased and sensitivity of the optical sensor elements can be maintained.

In the liquid crystal display device of the present invention, the elastic film may include protrusions and depressions formed on a surface of the elastic film, the surface being to come in contact with the polarizing plate.

According to the configuration described above, when no pressure is applied on the panel surface, an air layer is formed between the elastic film and the polarizing plate. This causes interface reflection of light at an interface between the polarizing plate and the air layer and at an interface between the air layer and the elastic film. This makes it possible to improve the reflectance of the light. Meanwhile, in a case where pressure is applied on the panel surface, the interface is reduced due to a contact between the elastic film and the polarizing plate. As a result, it becomes possible to lower the reflectance of the light.

Moreover, because the protrusions and depressions are formed on the surface in contact, it is possible in a case where no pressure is applied on the panel surface to further improve the reflectance of the light in the reflectance changing section as well as improving the interface reflection. Meanwhile, because the protrusions and depressions are formed on the surface in contact, it is possible in a case where pressure is applied to the panel surface to further lower the reflectance of the light in the reflectance changing section as well as reducing the interface reflection.

Further, because the protrusions and depressions are formed on the surface in contact, an air layer is partially formed in a case where the elastic film and the polarizing plate come into contact with each other due to application of pressure by use of a finger, an input pen, or the like on the target surface for detection. This makes it possible to improve detachability between the elastic film and the polarizing plate at the time when pressure is removed. As a result, it is possible to prevent a situation in which the elastic film and the polarizing plate stay stuck to each other after completion of an input into the area sensor.

In the liquid crystal display device of the present invention, the elastic film includes protrusions and depressions formed on a surface of the elastic film, the surface being opposite to another surface of the elastic film to come in contact with the polarizing plate.

The above configuration makes it possible to attain a reflectance changing section that lowers the reflectance in response to application of pressure.

The liquid crystal display device of the present invention further includes: a ((1/2) × n + 1/4) wave plate (n is an integer equal to or mote than 0) on a surface of the one polarizing plate, the surface of the one polarizing plate being on the image display surface side.

According to the above configuration, reflected light from an object (hereinafter, referred to as an inputting object), such as a finger, an input pen, or the like, for performing input to the panel surface is reduced. This makes it possible to prevent detection sensitivity of the optical sensor elements from being influenced by the reflectance of the inputting object. Further, according to the above configuration, it becomes possible to alleviate a problem such that display contents on the liquid crystal panel are shown (i.e. reflected) on a surface where the optical sensor elements are disposed.

In the liquid crystal display device of the present invention, it is preferable that the ((1/2) × n + 1/4) wave plate be disposed so that a slow axis of the ((1/2) × n + 1/4) wave plate is inclined at an angle of 45° with respect to a polarizing transmission axis of the one polarizing plate provided on the image display surface side.

According to the above configuration, it becomes possible to significantly reduce reflected light from an object (referred to as an inputting object) such as a finger, an input pen, or the like, for performing input onto the panel surface.

For a fuller understanding of the nature and advantages of the invention, reference should be made to the ensuing detailed description taken in conjunction with the accompanying drawings.

### Brief Description of Drawings

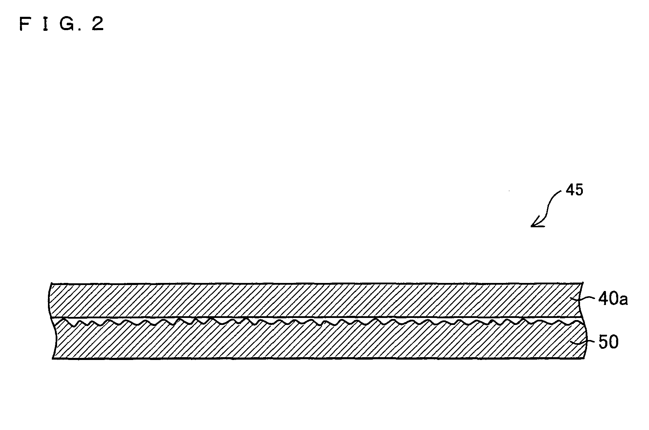

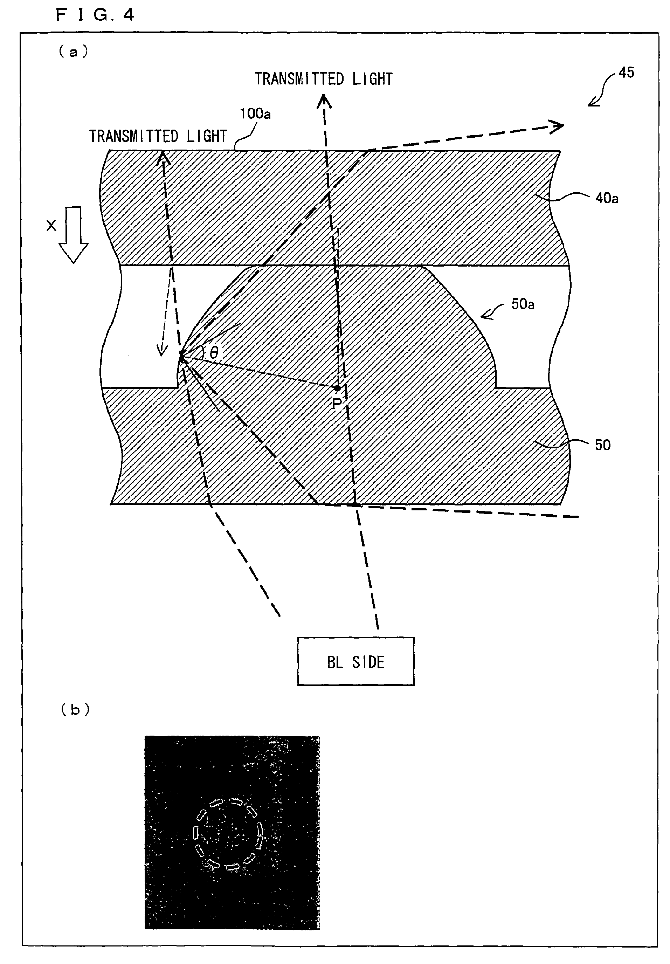

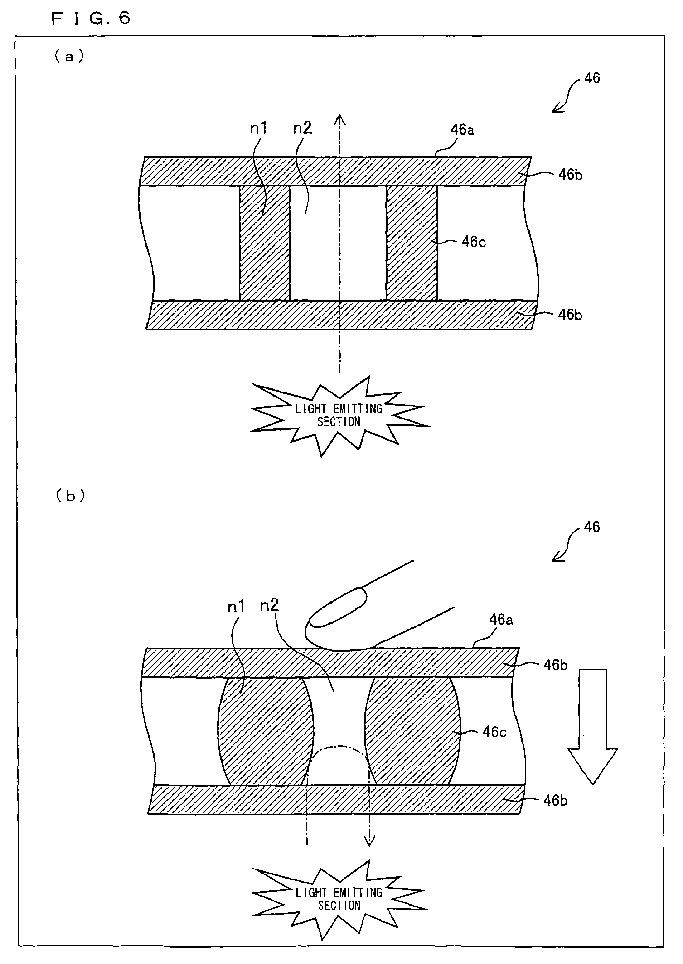

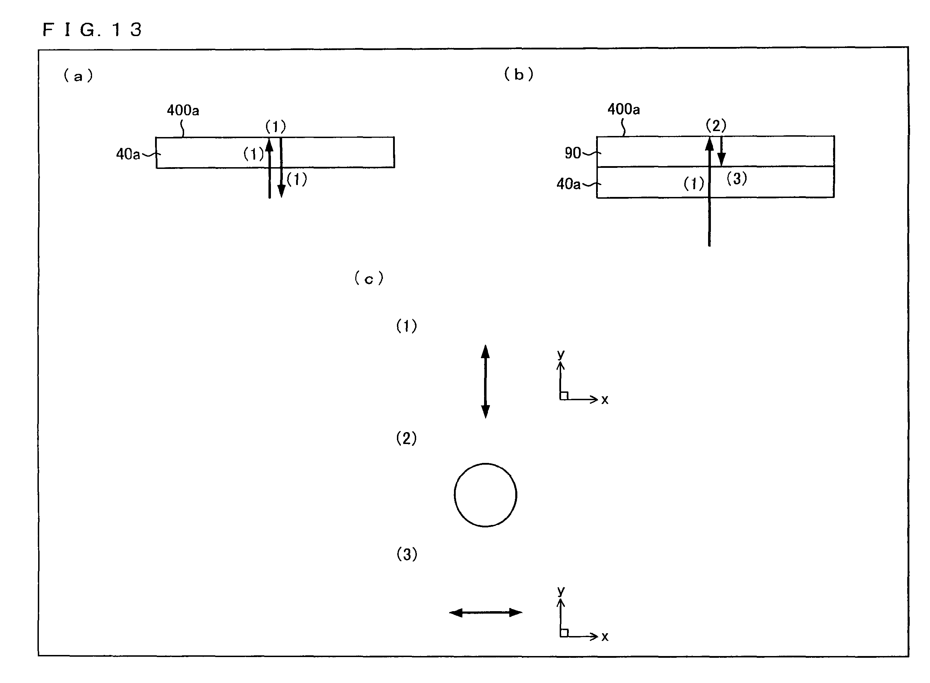

Fig. 1

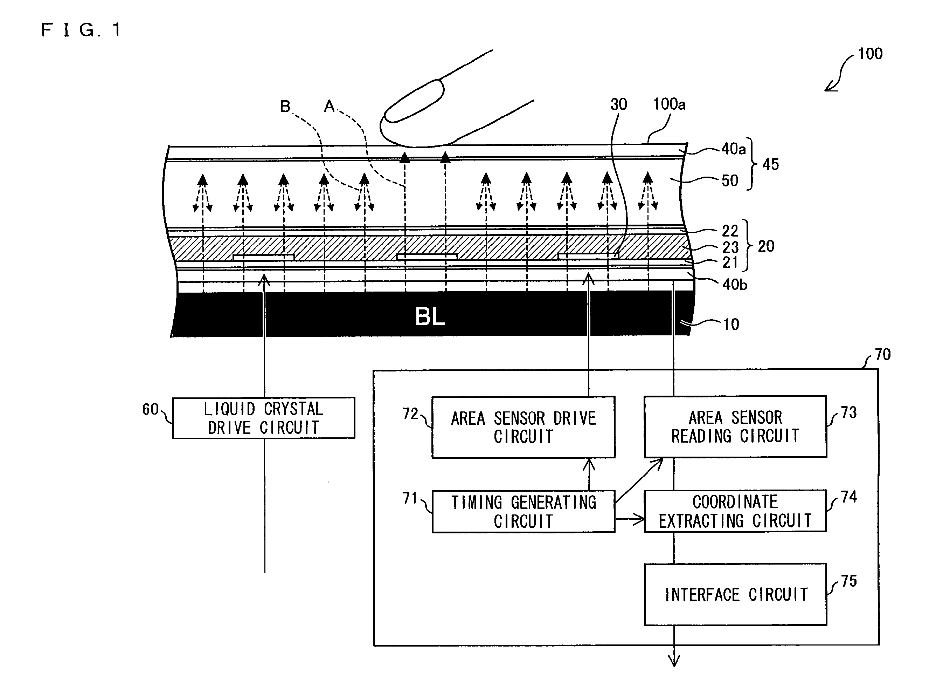

   Fig. 1 is a diagram schematically illustrating a configuration of a liquid crystal display device according to one embodiment of the present invention.
Fig. 2
   Fig. 2 illustrates a cross sectional view illustrating an exemplary configuration of a reflectance changing section provided in the liquid crystal display device of Fig. 1.
Fig. 3 Fig. 3 is a diagram illustrating an enlarged portion of the reflectance changing section of Fig. 2. Fig. 3 illustrates a state where no pressure is applied on a panel surface.
Fig. 4
   (a) of Fig. 4 is a diagram illustrating an enlarged portion of the reflectance changing section of Fig. 2. (a) of Fig. 4 illustrates a state where pressure is applied on the panel surface. (b) of Fig. 4 is a diagram schematically illustrating an image detected by optical sensor elements at the time when a finger touches the panel surface.
Fig. 5

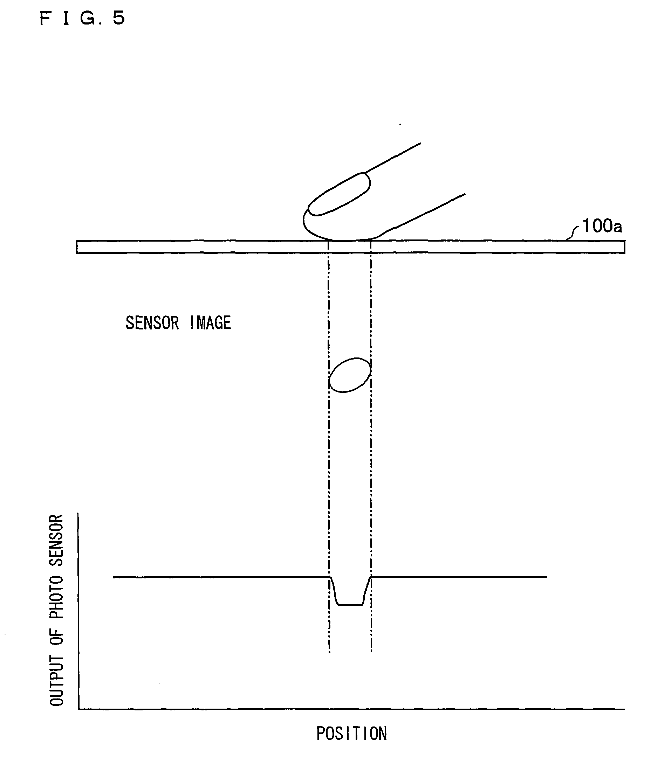

Fig. 5 is a diagram schematically illustrating outputs of optical sensor elements at the time when a finger touches the panel surface of the liquid crystal display device of Fig. 1.
Fig. 6
   (a) and (b) of Fig. 6 are cross sectional views each illustrating another example of a reflectance changing section of the present invention. (a) of Fig. 6 illustrates a state where a finger does not touch a target surface for detection, while (b) of Fig. 6 illustrates a state where a finger touches the target surface for detection.
Fig. 7

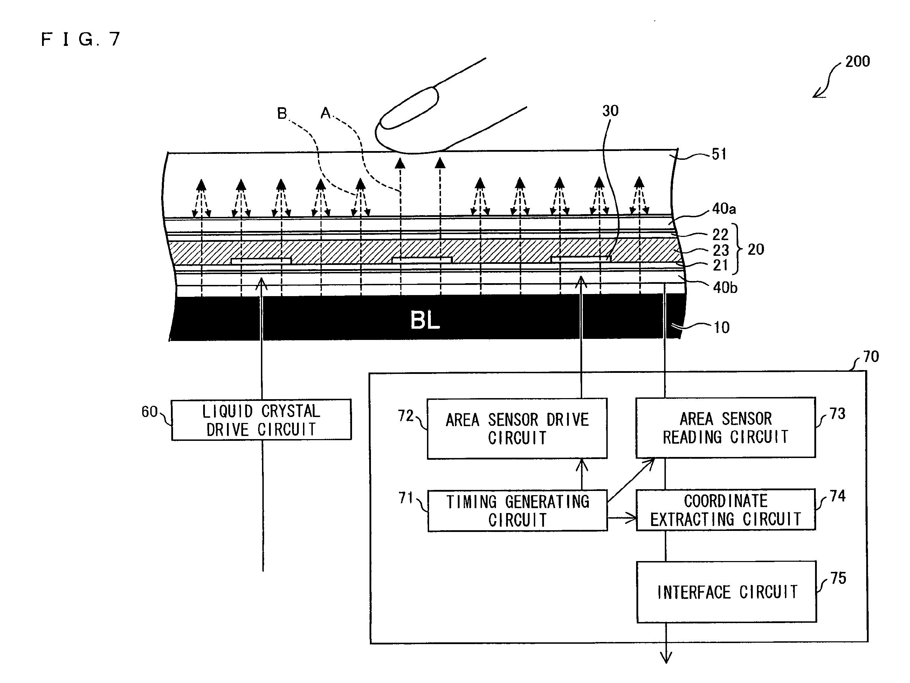

   Fig. 7 is a diagram schematically illustrating another exemplary configuration of a liquid crystal display device of the present invention.
Fig. 8

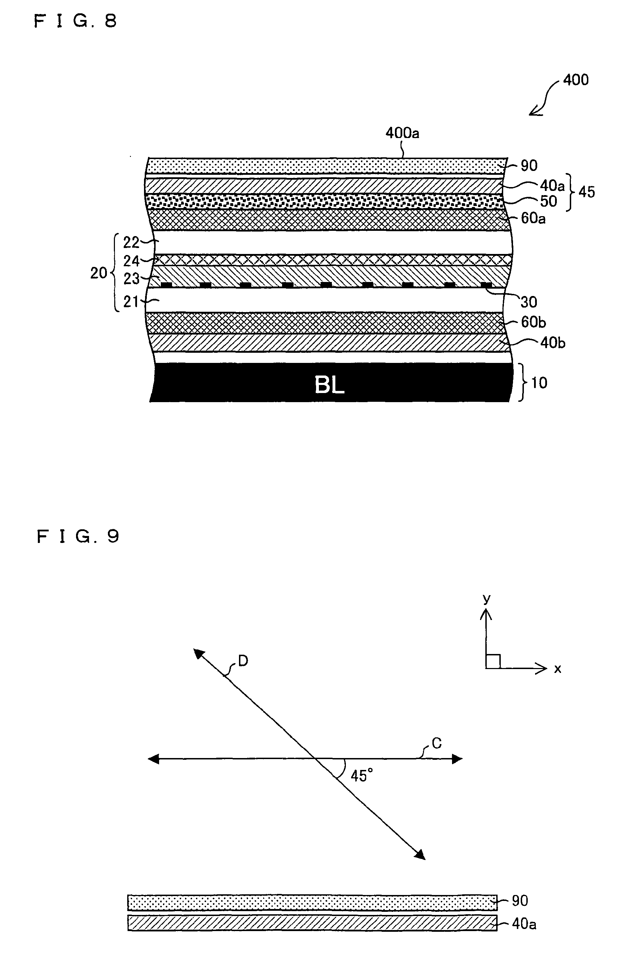

   Fig. 8 is a cross sectional view illustrating a configuration of a liquid crystal display device according to Embodiment 2 of the present invention.
Fig. 9
   Fig. 9 is a diagram schematically illustrating a relation between a transmission axis of a front polarizing plate and a slow axis of a 1/4λ phase plate which are provided in the liquid crystal display device of Fig. 8.
Fig. 10

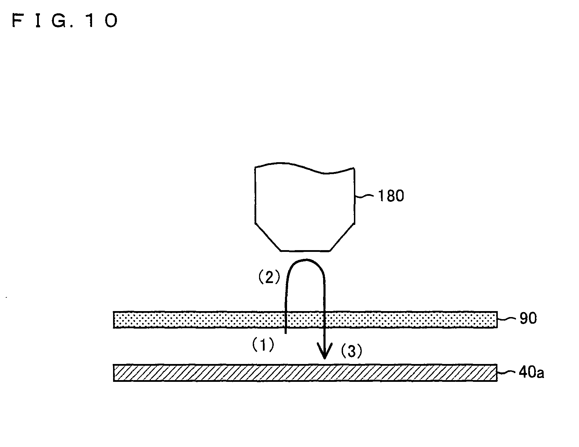

   Fig. 10 is a diagram schematically illustrating a state where light having passed through a 1/4λ phase plate is reflected by an inputting object and then passes back through the 1/4λ phase plate in the liquid crystal display device of Fig. 8.
Fig. 11

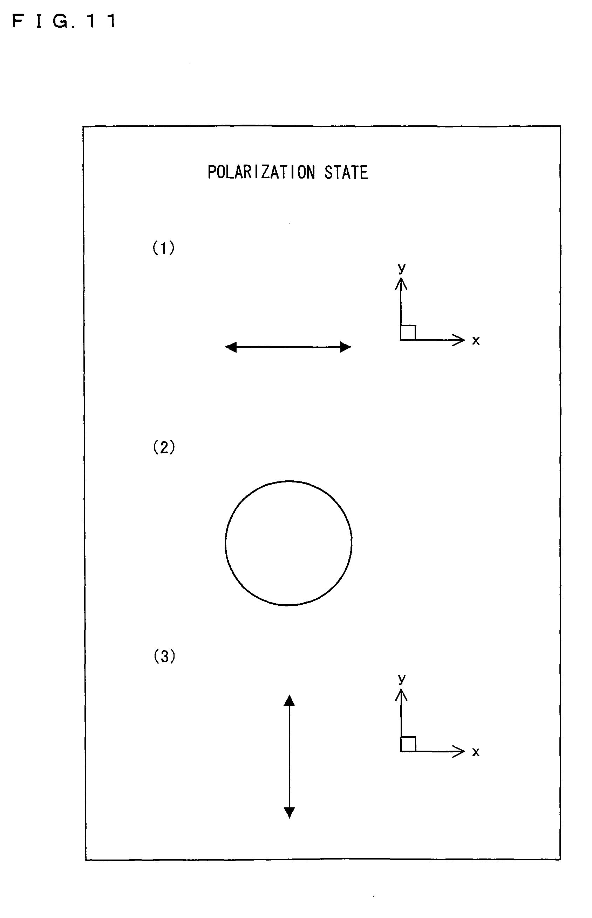

   Fig. 11 is a diagram schematically illustrating polarization states of light at respective positions shown in Fig. 10 in a case where the front polarizing plate and the 1/4λ phase plate are provided in a positional relation as shown in Fig. 9.
Fig. 12

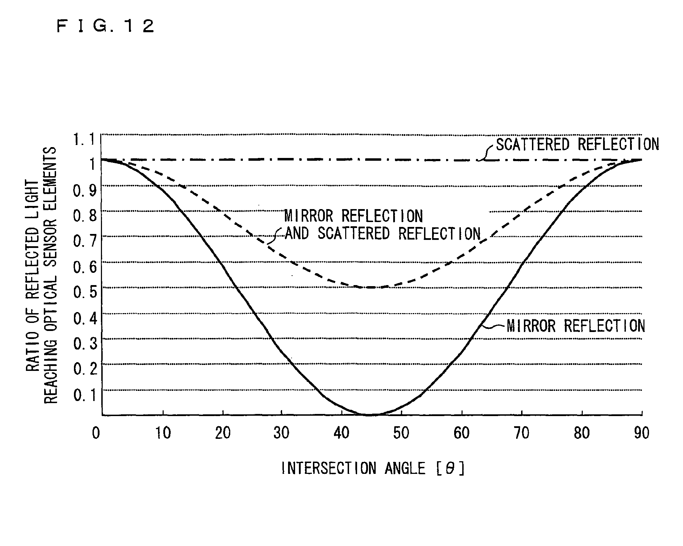

   Fig. 12 is a graph illustrating a relation of (i) an intersection angle θ between a transmission axis of a front polarizing plate and a slow axis of a 1/4λ phase plate which are provided in the liquid crystal display device of Fig. 8 and (ii) a reducing effect on reflected light from an inputting object.
Fig. 13
   (a) of Fig. 13 is a diagram schematically illustrating a state of interface reflection of light having exited from a liquid crystal panel at a panel surface in a liquid crystal display device to which no 1/4λ phase plate is provided. (b) of Fig. 13 is a diagram schematically illustrating a state of interface reflection of light having exited from a liquid crystal panel at a panel surface in the liquid crystal display device of Fig. 8. (c) of Fig. 8 is a diagram schematically illustrating polarization states at respective positions as shown in (a) and (b) of Fig. 13.
Fig. 14

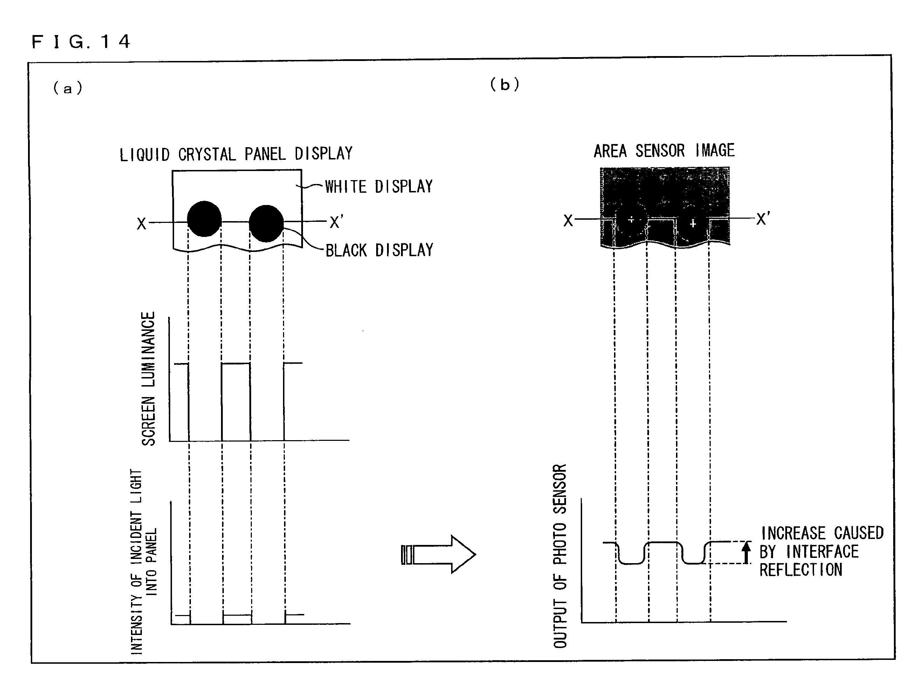

   Fig. 14 is a diagram schematically illustrating a relation between an image displayed on a liquid crystal panel and an image recognized by an area sensor in a liquid crystal display device to which no 1/4λ phase plate is provided.
Fig. 15

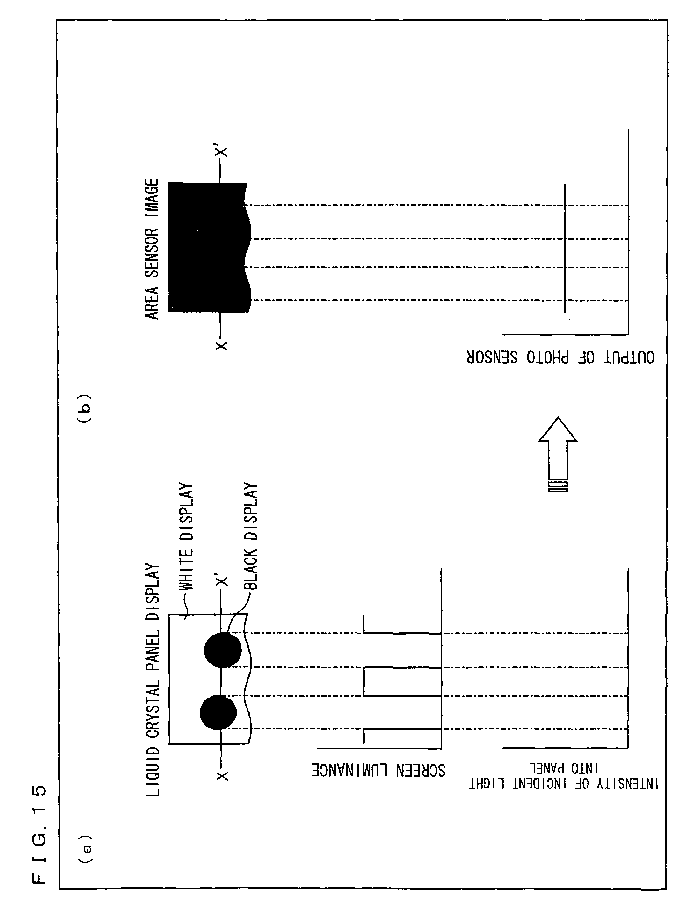

   Fig. 15 is a diagram schematically illustrating a relation between an image displayed on a liquid crystal panel and an image recognized by an area sensor in the liquid crystal display device of Fig. 8.
Fig. 16

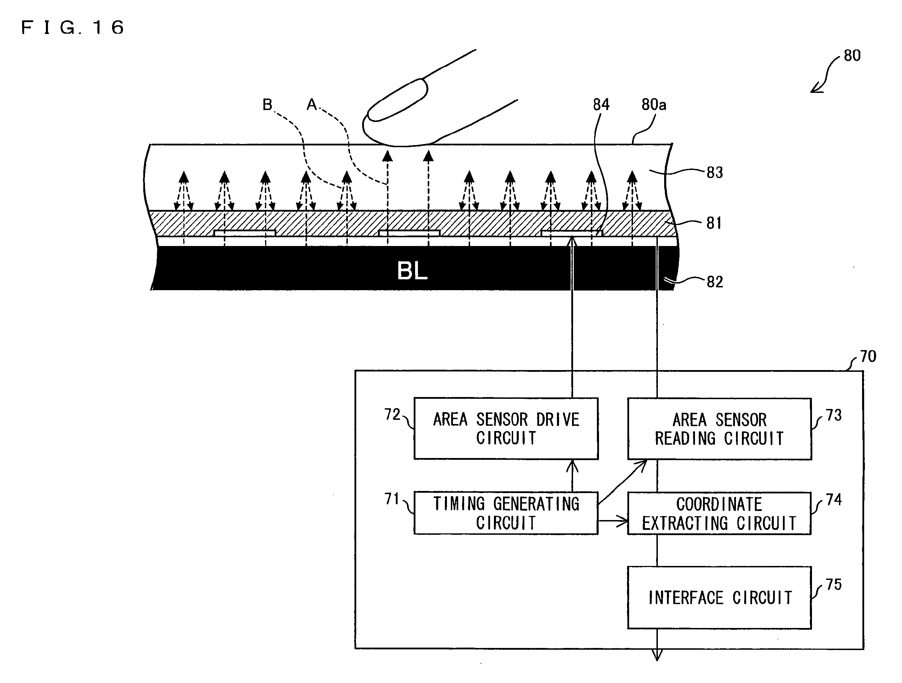

   Fig. 16 is a diagram schematically illustrating a configuration of an area sensor according to one embodiment of the present invention.
Fig. 17

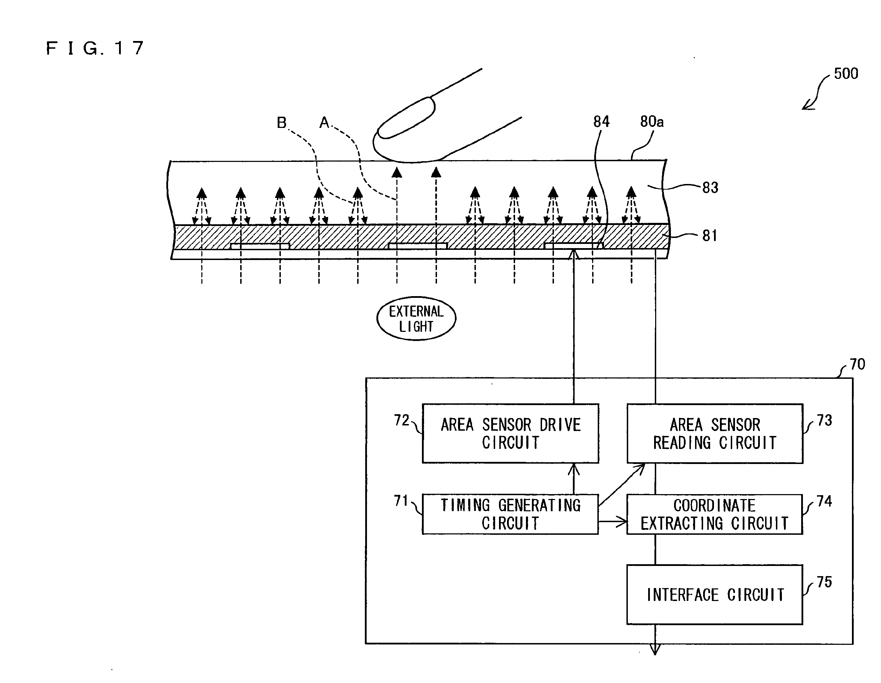

   Fig. 17 is a diagram schematically illustrating a configuration of an area sensor according to another embodiment of the present invention.
Fig. 18

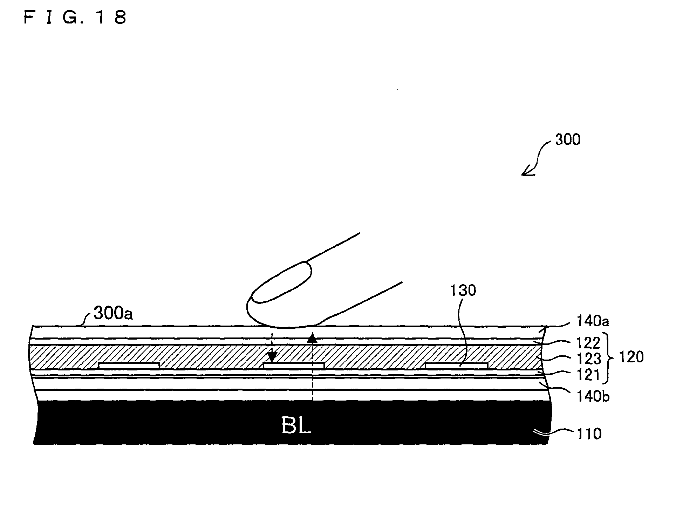

   Fig. 18 is a cross sectional view illustrating a configuration of a conventional liquid crystal display including an area sensor.
Fig. 19

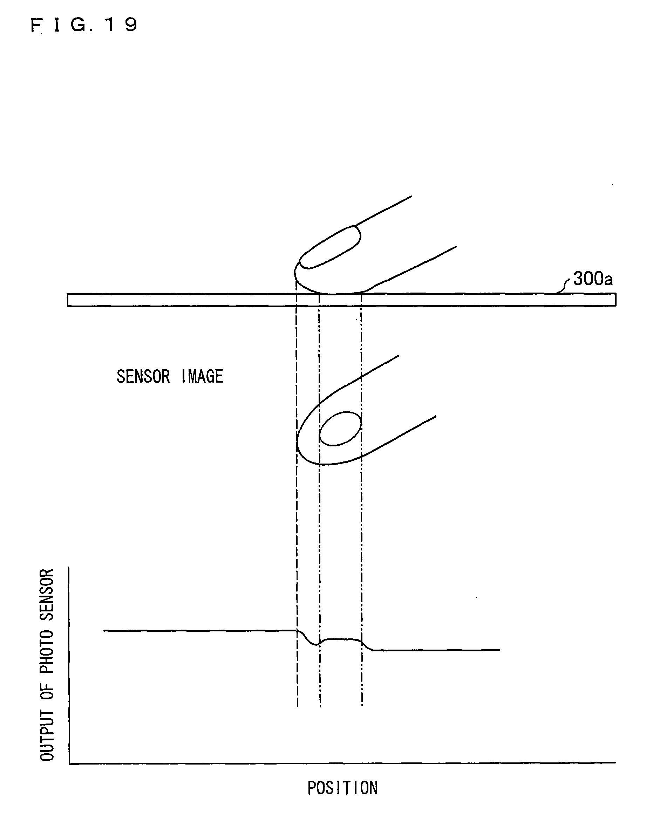

   Fig. 19 is a diagram schematically illustrating outputs of optical sensor elements at the time when a finger touches a panel surface of the liquid crystal display device of Fig. 18.

### Reference Signs List

- 10: Backlight (Light Emitting Section)
- 20: Liquid Crystal Panel (Position Detecting Section)
- 21: Active Matrix Substrate
- 22: Counter Substrate
- 23: Liquid Crystal Layer
- 30: Optical Sensor Element
- 40a Substrate,: Front Polarizing Plate (Transparent Flat Plate Polarizing Plate On Image Display Surface Side)
- 40b: Back Polarizing Plate
- 45: Reflectance Changing Section
- 46: Reflectance Changing Section
- 50: Elastic Film
- 70: Area Sensor Control Section
- 80: Area Sensor
- 80a: Target Surface For Detection
- 82: Light Emitting Section
- 83: Reflectance Changing Section
- 84: Optical Sensor Element
- 90: 1/4λ Phase Plate (1 / 4 Wave Plate)
- 100: Liquid Crystal Display Device (Display Device)
- 100a: Panel Surface (Target Surface For Detection)
- 400: Liquid Crystal Display Device (Display Device)
- 400a: Panel Surface (Target Surface For Detection)
- 500: Area Sensor
- C: Transmission Axis Of Front Polarizing Plate
- D: Slow Axis Of 1/4λ Phase Plate

### Description of Embodiments

### [Embodiment 1]

The following explains one embodiment of the present invention, with reference to Figs. 1 to 5. Note that the present invention is not limited by this embodiment.

The present embodiment explains a touch-panel-integrated liquid crystal display device having an area sensor function (specifically, touch panel function).

With reference to Fig. 1, the following explains a configuration of the touch-panel-integrated liquid crystal display device according to the present embodiment. A touch-panel-integrated liquid crystal display device 100 (also referred to simply as a liquid crystal display device 100) shown in Fig. 1 has a touch panel function. In the touch panel function, an optical sensor element provided in each pixel detects an image on a surface of a display panel so that an input position is detected.

As shown in Fig. 1, the touch-panel-integrated liquid crystal display device 100 of the present embodiment includes a liquid crystal panel 20 (position detecting section), and a backlight 10 (light emitting section) provided on a backside of the liquid crystal panel 20. The backlight 10 illuminates the liquid crystal panel 20.

The liquid crystal panel 20 includes an active matrix substrate 21 on which a number of pixels are provided in a matrix form, and a counter substrate 22 that is provided so as to be opposed to the active matrix substrate 21. Further, the liquid crystal panel 20 is configured to include a liquid crystal layer 23, as a display medium, between these two substrates. Note that in the present embodiment, a mode of the liquid crystal panel 20 is not specifically limited but may be any display mode, for example, a TN mode, an IPS mode, or a VA mode.

On outer sides of the liquid crystal panel 20, a front polarizing plate 40a and a back polarizing plate 40b are provided so as to sandwich the liquid crystal panel 20.

The polarizing plates 40a and 40b each serves as a polarizer. For example, when a vertical-alignment-mode liquid crystal material is sealed in the liquid crystal layer, a normally black mode liquid crystal display device can be attained by arranging a polarization direction of the front polarizing layer 40a and a polarization direction of the back polarizing layer 40b in crossed Nicols.

Between the front polarizing plate 40a and the liquid crystal pane 20, an elastic film 50 is provided. In the liquid crystal display device 100 of the present embodiment, a laminated structure of the elastic film 50 and the front polarizing plate 40a forms a reflectance changing section 45. The reflectance changing section 45 causes a reflectance of light from the backlight 10 to change in response to application of pressure onto a surface (a target surface 100a for detection of a touch panel) of the device.

The active matrix substrate 21 is provided with TFTs (not shown) that are switching elements for driving respective pixels, an alignment film (not shown), optical sensor elements 30, and the like.

Further, on the counter substrate 22, a color filter layer, a common electrode, an alignment film and the like (which are not shown) are formed. The color filter layer includes colored sections each having a color of red (R), green (G), or blue (B), and a black matrix.

As described above, the touch-panel-integrated liquid crystal display device 100 of the present embodiment is provided with an optical sensor element 30 in each pixel area. This configuration provides an area sensor. When a finger or an input pen touches a specific position on the surface (the target surface 100a for detection) of the liquid crystal panel 20, the optical sensor elements 30 can recognize the position and can input information into the device or execute an intended operation. In this way, in the liquid crystal display device 100 of the present invention, a touch panel function can be attained by use of the optical sensor elements 30.

The optical sensor element 30 is made of a photodiode or a phototransistor. The optical sensor element 30 causes a current flow in accordance with strength of light received, thereby detecting an intensity of light received. The TFTs and the optical sensor elements 30 may be monolithically formed on the active matrix substrate 21 by using substantially identical processes. In other words, a part of constituent members of each optical sensor element 30 may be formed concurrently with a part of constituent members of each TFT. Such optical sensor elements may be formed according to a conventionally known method for producing a liquid crystal display device including optical sensor elements.

Note that in the present invention, it is not necessarily required to provide an optical sensor element in each one pixel but an optical sensor may be provided in, for example, each pixel having a color filter of R, each pixel having a color filter of G, or each pixel having a color filter of B.

Further, though not shown in Fig. 1, a front phase plate may be provided as an optical compensation element on an outward side of the counter substrate 22 while a back phase plate may be provided as an optical compensation element on an outward side of the active matrix substrate 21.

Further, Fig. 1 shows a liquid crystal drive circuit 60 for performing display drive on the liquid crystal panel 20 and an area sensor control section 70 for driving the area sensor. Further, Fig. 1 shows an internal configuration of the area sensor control section 70. Note that a conventionally known configuration can be applied to the configurations of the liquid crystal drive circuit and the area sensor control section of the present embodiment.

As shown in Fig 1, the area sensor control section 70 includes a timing generating circuit 71, an area sensor drive circuit 72, an area sensor reading circuit 73, a coordinate extracting circuit 74, and an interface circuit 75.

The timing generating circuit 71 generates a timing signal used for controlling operations of respective circuits so that the operations synchronize.

The area sensor drive circuit 72 supplies an electric source for driving the optical sensor elements 30.

The area sensor reading circuit 73 receives a received-light signal from the optical sensor elements 30 each causing a flow of a current having a different value in accordance with an intensity of light received. Then, the area sensor reading circuit 73 calculates the intensity of the light received.

The coordinate extracting circuit 74 calculates finger coordinates where a finger touches the surface (the target surface 100a for detection) of the liquid crystal panel, based on the intensity of the light received by the optical sensor elements 30. This intensity has been calculated by the area sensor reading circuit 73.

The interface circuit 75 outputs, to other control section (e.g. the liquid crystal drive circuit 60) within the liquid crystal display device 100, information regarding the finger coordinates that has been calculated by the coordinate extracting circuit 74.

The liquid crystal display device 100 is configured as described above. Therefore, when a finger or an input pen touches the surface (the target surface 100a for detection) of the liquid crystal display device 100, the optical sensor elements 30 formed within the liquid crystal panel 20 can recognize the finger or the input pen as an image and thereby an input position can be detected.

Further, in the liquid crystal display device 100 of the present invention, the laminated structure of the elastic film 50 and the front polarizing plate 40a forms the reflectance changing section 45. Therefore, when a finger, an input pen, or the like touches the target surface 100a for detection and pressure is applied on the target surface 100a, a reflectance of the light from the backlight 10 is changed. This makes it possible to precisely detect whether or not a finger or an input pen touches the panel surface.

Fig. 2 shows an exemplary configuration of the reflectance changing section 45 provided in the liquid crystal display device 100. In the reflectance changing section 45 shown in Fig. 2, the front polarizing plate 40a (transparent flat plate substrate) is laminated on the elastic film 50. The elastic film 50 has a surface to be in contact with the front polarizing plate 40a and a lot of protrusions and depressions are provided on the surface. An average interval between protrusions or depressions is preferably in a range of 3 µm to 2 mm. Further, an average roughness relative to a centerline is preferably in a range of 5 µm to 50 µm. The average roughness relative to the centerline is an average value of depths of the protrusions and depressions. The average roughness is an indicator showing how easily the elastic film and the front polarizing plate (transparent substrate) stick to each other. If the average roughness is low (depths of the protrusions and depressions are small), an air path is easily closed and therefore the elastic film and the transparent substrate easily stick to each other.

A material of the elastic film 50 is not specifically limited but may be anything that is elastic. For example, rubber is preferably used as the material of the elastic film 50. The elastic film 50 has a transmittance of preferably 90 % or more. Further, the elastic film 50 has a refractive index preferably in a range of 1.3 to 1.6.

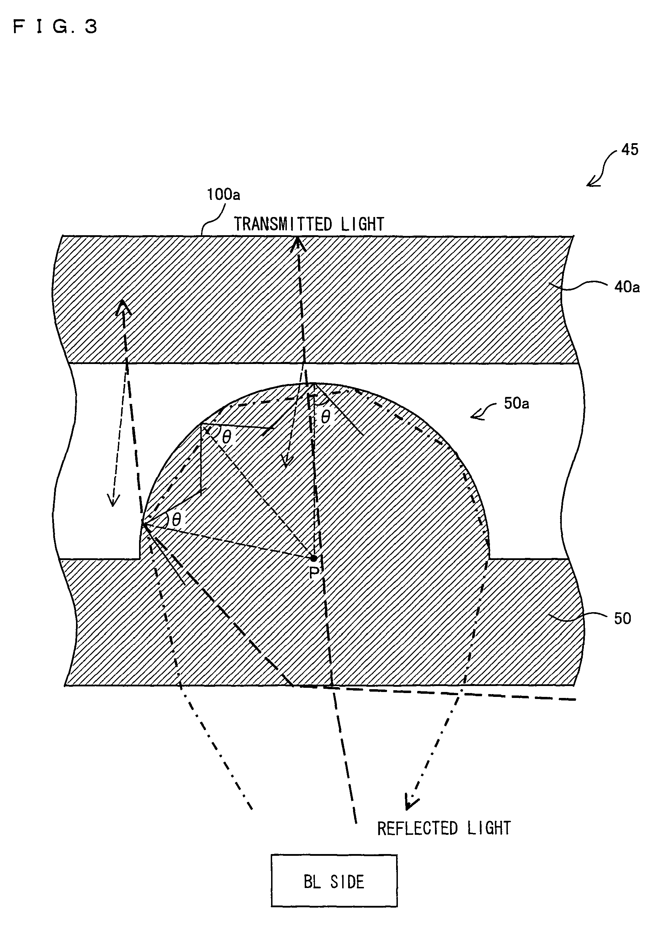

The reflectance changing section 45 is configured as described above. Therefore, when a finger or the like touches the target surface 100a for detection and pressure is applied on the target surface 100a, a reflectance of the light from the backlight 10 lowers. This point is explained below, with reference to Figs. 3 and 4.

Fig. 3 shows an enlarged portion of the reflectance changing section 45 shown in Fig. 2. Fig. 3 shows a state where no pressure is applied on the panel surface. (a) of Fig. 4 also shows an enlarged portion of the reflectance changing section 45 shown in Fig. 2. (a) of Fig. 4 shows a state where pressure is applied on the panel surface.

As shown in Fig. 3, in the state where no pressure is applied on the target surface 100a for detection, a protrusion 50a (a protrusion included in the protrusions and depressions) formed on the surface of the elastic film 50 to be in contact with the front polarizing plate 40a is out of contact with the front polarizing plate 40a. That is, an air layer is formed between the protrusion 50a of the elastic film 50 and the front polarizing plate 40a.

In Fig. 3, light entering the reflectance changing section 45 from a backside (from the backlight 10) is indicated by a dotted-line arrow or a dashed-line arrow. Note that the dotted-line arrow shows a light path of light passing through the elastic film 50 and the dashed-line arrow shows a light path of light reflected within the protrusion 50a of the elastic film 50.

The elastic film 50 is made of a material having a reflectance of n. In the hemispherical protrusion 50a, a center of a sphere is denoted by P. Now, a focus is put on an incident angle of light with respect to a normal to a surface of the protrusion 50a from the center P of the sphere. Light entering at an angle within an angle θ with respect to the surface of the protrusion 50a passes through the surface of the protrusion 50a. Meanwhile, light entering at an angle greater than the angle θ with respect to the surface of the protrusion 50a is reflected by the surface of the protrusion 50a. Note that the angle θ is determined depending on a reflectance n of a material from which the elastic film 50 is made.

The light, indicated by a dotted line, that has passed through the elastic film 50, once enters the air layer that is present between the elastic film 50 and the front polarizing plate 40a. The light transmitting within the air layer is separated into light to pass through an interface between the air layer and the front polarizing plate 40a and light to be reflected at the interface.

Meanwhile, as shown in Fig. 3, the light, indicated by a dashed line, that has been reflected by the surface of the protrusion 50a of the elastic film 50 is repeatedly reflected by the surface of the protrusion 50a and exits back to a side provided with the backlight 10. That is, the light indicated by the dashed line among light that has been emitted from the backlight 10 is reflected by the reflectance changing section 45.

Next, the following explains a state where a finger or the like touches the target surface 100a for detection and pressure is applied onto the reflectance changing section 45, with reference to (a) of Fig. 4.

As shown in (a) of Fig. 4, in a case where pressure is applied in a direction indicated by an arrow X onto the reflectance changing section 45, the protrusion 50a of the elastic film 50 is compressed and comes in contact with a surface of the front polarizing plate 40a.

As a result, the following change occurs in the light paths of the light from the backlight 10.

At a point where the protrusion 50a is in contact with the front polarizing plate 40a, the air layer is eliminated and no light is reflected at the interface between the air layer and the front polarizing plate 40a. Accordingly, all light is transmitted to the front polarizing plate 40a. Regarding light having reached the surface of the protrusion 50a at an angle greater than the angle θ with respect to the surface of the protrusion 50a (in Fig. 3, the light that is repeatedly reflected within the protrusion 50a and exits back to the side provided with the backlight 10), even this light transmits to the front polarizing plate 40a through the point where the protrusion 50a is in contact with the front polarizing plate 40a. That is, the light path indicated by the dashed line in Fig. 3 disappears.

Due to such an effect, when pressure is applied on the target surface 100a for detection, a reflectance of the light from the backlight 10 lowers at the reflectance changing section 45.

As described above, the reflectance changing section 45 provided in the liquid crystal display device 100 is configured to have a different reflectance of the light from the backlight 10 depending on whether or not pressure is applied on the panel surface (the target surface 100a for detection). More specifically, as compared to a case where no pressure is applied on the target surface 100a for detection, the reflectance changing section 45 has a lower reflectance of the light from the backlight 10 when pressure is applied on the target surface 100a for detection.

(b) of Fig. 4 is a diagram schematically illustrating an image detected by the optical sensor elements 30 at the time when a finger touches the panel surface. In an area where the finger touches the target surface 100a for detection (in (b) of Fig. 4, an area enclosed by a dotted line), a reflectance of the light from the backlight 10 lowers in the reflectance changing section 45 and most of the light passes through the reflectance changing section 45. As a result, a light intensity detected by optical sensor elements 30 in such an area lowers. Therefore, as shown in (b) of Fig. 4, in the area where the finger touches the target surface 100a for detection, an image detected is darker than an image of other areas.

Fig. 5 schematically illustrates outputs of optical sensor elements 30 at the time when a finger touches the panel surface of the liquid crystal display device 100. As shown in a graph of Fig. 5, only in a section where the finger touches the panel surface, the outputs of the optical sensor elements 30 lower due to a decreased reflectance of the light from the backlight.

For comparison, the following explains a conventional touch-panel-integrated liquid crystal display device having an area sensor function. Fig. 18 shows a configuration of a conventional touch-panel-integrated liquid crystal display 300.

As shown in Fig. 18, the conventional touch-panel-integrated liquid crystal display device 300 (also referred to simply as a liquid crystal display device 300) includes a liquid crystal panel 120 and a backlight 110 that is provided on a backside of the liquid crystal panel 120 and that illuminates the liquid crystal panel 120.

The liquid crystal panel 120 includes an active matrix substrate 121 on which a number of pixels are provided in a matrix form and a counter substrate 122 that is provided so as to be opposed to the active matrix substrate 121. Further, the liquid crystal panel 120 is configured to include a liquid crystal layer 123, as a display medium, between these two substrates.

On outer sides of the liquid crystal panel 120, a front polarizing plate 140a and a back polarizing plate 140b are provided so as to sandwich the liquid crystal panel 120.

The active matrix substrate 121 is provided with TFTs (not shown) that are switching elements for driving respective pixels, an alignment film (not shown), optical sensor elements 130, and the like.

The liquid crystal display device 300 utilizes light from the backlight 110, as a light source. When a finger or an input pen touches a target surface 300a for detection, the finger or the input pen is recognized as an image so that an input position is detected. That is, the optical sensor elements 130 utilizes light that has been emitted from the backlight 110 and that has passed through the liquid crystal panel 120, and detects light obtained as a result of reflection of the above light by an object on the target surface 300a for detection. In this way, the liquid crystal display device 300 detects a position of a finger or an input pen as image data.

By comparison with the configuration of the liquid crystal display device 100 of the present embodiment, the configuration of the conventional liquid crystal display device 300 is different from the configuration of the liquid crystal display device 100 in that the conventional liquid crystal display device 300 is not provided with a reflectance changing section. That is, the liquid crystal display device 300 merely detects an object present on the target surface 300a for detection simply as image data.

Fig. 19 schematically illustrates outputs of the optical sensor elements 130 at the time when a finger touches a panel surface of the liquid crystal display device 300. As shown in a graph of Fig. 19, as compared with an area where no finger is present on the target surface 300a for detection, the outputs of the optical sensor elements 130 tend to be slightly lower in an area where a finger is present on the target surface 300a for detection. However, a difference is small between the area where no finger is present on the target surface 300a and the area where a finger is present on the target surface 300a. Further, because a reflectance changing section is not provided in the conventional liquid crystal display device 300, the conventional liquid crystal display panel 300 cannot distinguish precisely whether or not a finger or the like touches the target surface 300a for detection. Therefore, accuracy in detection of the optical sensor elements 130 is not sufficient for precisely determining an input position of a finger, an input pen or the like.

Further, in a case of a display device where, as in the liquid crystal display device 300, a light source is a light emitting section provided on a backside of optical sensor elements and an image of a panel surface is detected by use of reflected light from an object on the panel surface, an intensity of the reflected light falls when the display device displays a dark image such as a black display. As a result, sensitivity in detection by an optical sensor significantly deteriorates.

In order to solve this problem, in the liquid crystal display device 100 of the present embodiment, as shown by an arrow B in Fig. 1, much light among the light from the backlight 10 is reflected within the reflectance changing section 45 in an area where no finger or the like touches the panel surface (the target surface 100a for detection). Meanwhile, in an area where a finger or the like touches the panel surface (the target surface 100a for detection), as shown by an arrow A in Fig 1, much light among the light from the backlight 10 is transmitted and a reflectance lowers. This makes it possible to more precisely distinguish whether or not a finger, an input pen, or the like touches the panel surface, as compared to the conventional liquid crystal display device including an area sensor.

Moreover, because the reflectance changing section 45 is formed by laminating the front polarizing plate 40a on the elastic film 50, an intensity of light transmitting through the elastic film 50 is not dependent on a display state of the liquid crystal panel 20 (that is, a display state regarding whether the display panel 20 is displaying a bright image or a dark image). This makes it possible to always keep detection performance of the optical sensor elements 30 constant regardless of a display state of the liquid crystal panel 20.

Further, in the present embodiment, the reflectance changing section 45 is configured by laminating the flat front polarizing plate 40a on the elastic film 50 having an uneven surface. This further improves a reflectance of light in the reflectance changing section 45 in a case where no pressure is applied on the target surface 100a for detection. Meanwhile, in a case where pressure is applied on the target surface 100a for detection, a reflectance of light in the reflectance changing section 45 can be further decreased. This makes it possible to more precisely detect whether or not a finger or the like touches the target surface 100a for detection.

Furthermore, in a case where the protrusions and depressions are formed on the surface that the elastic film 50 has and that is in contact with the front polarizing plate 40a, an air layer is formed partially when the elastic film 50 comes in contact with the front polarizing plate 40a due to application of pressure onto the target surface 100a for detection by use of a finger or an input pen. This can improve detachability between the elastic film and the front polarizing plate 40a in response to release from the pressure. This makes it possible to prevent a problem such that after input into the area sensor is completed, the elastic film 50 and the front polarizing plate 40a stay stuck to each other and do not return to a previous state prior to the application of the pressure.

In the reflectance changing section described in the present embodiment, a reflectance of the light from the backlight (light emitting section) lowers due to application of pressure. However, the present invention is not limited to this, but may be arranged such that a reflectance of light rises due to application of pressure.

(a) and (b) of Fig. 6 shows another exemplary configuration of a reflectance changing section where a reflectance of light from a light emitting section rises due to application of voltage. (a) of Fig. 6 illustrates a cross sectional configuration of a reflectance changing section 46 in a case where no pressure is applied on a target surface 46a for detection, while (b) of Fig. 6 illustrates a cross sectional configuration of the reflectance changing section 46 in a case where pressure is applied on the target surface 46a for detection.

As shown in (a) of Fig. 6, the reflectance changing section 46 is formed by using an elastic body such as rubber so that two flat plates 46b and 46b are connected by a plurality of columnar bodies 46c in a state where no pressure is applied on the target surface 46a for detection. Here, for example, a refractive index of the elastic body is represented by n1 and a refractive index of an air layer is represented by n2. Then, the reflectance changing section 46 is configured such that an air layer and a columnar body 46c each having a different refractive index are alternately provided between the two flat plates 46b and 46b.

In the reflectance changing section 46 having a structure described above, unless pressure is applied on the target surface 46a for detection, the reflectance changing section 46 transmits light (in (a) of Fig. 6, indicated by a dashed line) that is emitted from, for example, a light emitting section such as a backlight provided on a backside (a side opposite to the target surface 46a for detection) of the reflectance changing section 46 (See (a) of Fig. 6).

Meanwhile, in a state where a finger or the like touches the target surface 46a for detection and pressure is applied on the target surface 46a, the columnar bodies 46c are compressed in a direction indicated by an arrow and deformed as shown in (b) of Fig. 6. As a result, the light emitted from, for example, the light emitting section such as the backlight (in (b) of Fig. 6, indicated by a dashed line) is reflected by the reflectance changing section 46.

The liquid crystal display device of the present invention may be provided with the above-described reflectance changing section that causes a reflectance of the light from the light emitting section to rise in response to application of pressure on the target surface for detection.

The present embodiment explains, as an exemplary reflectance changing section, the reflectance changing section in which the elastic film 50 has the surface to be in contact with the front polarizing plate 40a and the surface is provided with the number of protrusions and depressions. However, the present invention is not limited to such a configuration. That is, the present invention encompasses a reflectance changing section in which an elastic film 50 has a surface to be in contact with the front polarizing plate 40a and the other surface of the elastic film 50 opposite to the aforesaid surface is provided with a number of protrusions and depressions. This configuration makes it possible to attain a reflectance changing section that lowers a reflectance in response to application of pressure. However, it should be noted that this configuration has a slightly smaller scale of change in reflectance between a case where pressure is applied onto a target surface for detection and a case where no pressure is applied onto the target surface, as compared to the reflectance changing section 45 of the present embodiment.

Further, the present embodiment above explains an exemplary case where the reflectance changing section has a laminated structure including the elastic film 50 and the front polarizing plate 40a. However, the present invention is not limited to the configuration. Fig. 7 shows another exemplary configuration of the present invention.

In a liquid crystal display device 200 shown in Fig. 7, a reflectance changing section 51 is formed in an upper layer of the front polarizing plate 40a. Though Fig. 7 does not show a specific structure, the reflectance changing section 51 has a structure in which a transparent flat plate substrate is laminated on the elastic film 50 as shown in Fig. 2. The transparent substrate may be made of, for example, acryl, diamond, or silicon dioxide. Except the above-described configuration, the liquid crystal display device 200 of Fig. 7 has the same configuration as that of the liquid crystal display device 100, and an explanation thereof is omitted.

In the above configuration, as indicated by an arrow B in Fig. 7, much light among the light from the backlight 10 is reflected within the reflectance changing section 51 in an area where no finger or the like touches a surface of the liquid crystal display device 200. Meanwhile, as indicated by an arrow A in Fig. 7, much light among the light from the backlight 10 is transmitted in an area where a finger or the like touches the surface of the liquid crystal display device 200 and accordingly a reflectance in the area lowers. This makes it possible to precisely detect whether or not the panel surface is touched, as compared with a conventional liquid crystal display device including an area sensor.

It should be noted that preferably, the reflectance changing section is provided in a layer below the front polarizing plate 40a for attaining an area sensor having a high detection performance that does not depend on a display state of a liquid crystal display device (even in a case where display is dark).

Further, the present embodiment explains the liquid crystal display device including the backlight illuminating the liquid crystal panel. However, the present invention is not limited to such a configuration. As an example of a liquid crystal display device that does not include a backlight, there is a liquid crystal display device that performs display by illuminating a liquid crystal panel from a backside of the liquid crystal panel with use of external light. In this case, a reflectance changing section provided in the liquid crystal display device changes a reflectance of the external light that enters from the backside of the liquid crystal panel, depending on whether or not pressure is applied on a panel surface. This makes it possible to more precisely detect whether or not the panel surface is touched, as compared to a conventional liquid crystal display device including area sensor.

### [Embodiment 2]

The following explains Embodiment 2 of the present invention, with reference to Figs. 8 to 12. Note that the present invention is by no means limited by this embodiment.

The present embodiment describes an exemplary configuration of a touch-panel-integrated liquid crystal display device having an area sensor function. This exemplary configuration is different from a configuration of a liquid crystal display device 100 described in Embodiment 1.

Fig. 8 illustrates a configuration of a touch-panel-integrated liquid crystal display device 400 (also referred to simply as a liquid crystal display device 400) according to the present embodiment.

As shown in Fig. 8, the touch-panel-integrated liquid crystal display 400 of the present embodiment includes a liquid crystal panel 20 and a backlight 10 provided on a backside of the liquid crystal panel. The backlight 10 illuminates the liquid crystal panel 20.

The liquid crystal panel 20 includes an active matrix substrate 21 on which a number of pixels are provided in a matrix form, and a counter substrate 22 that is provided so as to be opposed to the active matrix substrate 21. Further, the liquid crystal panel 20 is configured to include a liquid crystal layer 23, as a display medium, between these two substrates.

On an outward side of the counter substrate 22, a front phase plate 60a is provided as an optical compensation element. Meanwhile, on an outward side of the active matrix substrate 21, a back phase plate 60b is provided as an optical compensation element. The front phase plate 60a and the back phase plate 60b are provided for the purpose of improving a transmittance and/or a viewing angle characteristic, for example, in a case where a vertical-alignment-mode liquid crystal material is sealed in the liquid crystal layer. Note that display can be performed even if the liquid crystal panel 20 is configured not to include these phase plates.

On an outward side of the front phase plate 60a, a front polarizing plate 40a is provided, and on an outward side of the back phase plate 60b, a back polarizing plate 40b is provided.

The polarizing plates 40a and 40b each serves as a polarizer. For example, when a vertical-alignment-mode liquid crystal material is sealed in the liquid crystal layer, a normally black mode liquid crystal display device can be attained by arranging a polarization direction of the front polarizing layer 40a and a polarization direction of the back polarizing layer 40b in crossed Nicols.

Between the front polarizing plate 40a and the front phase plate 60a, an elastic film 50 is provided. In the liquid crystal display device 400 of the present embodiment, a laminated structure including the elastic film 50 and the front polarizing plate 40a forms a reflectance changing section 45 whose reflectance of light from the backlight 10 changes due to application of pressure onto a surface (target surface 400a for detection) of the liquid crystal display device 400. To a configuration of the reflectance changing section 45, a configuration of a reflectance changing section described in Embodiment 1 can be applied. Accordingly, an explanation of a specific configuration of the reflectance changing section 45 here is omitted.

In addition, the liquid crystal display device 400 of the present embodiment is provided with a 1/4λ phase plate (1 / 4 wave plate) 90 on an image display surface side (on a side provided with an image display surface) of the front polarizing plate 40a. The 1/4λ phase plate causes a phase difference of 1 / 4 wavelength in light.

The active matrix substrate 21 is provided with TFTs (not shown) that are switching elements for driving respective pixels, an alignment film (not shown), optical sensor elements 30, and the like.

Further, on the counter substrate 22, a color filter layer 24, a common electrode, an alignment film and the like (which are not shown) are formed. The color filter layer 24 includes colored sections each having a color of red (R), green (G), or blue (B), and a black matrix.

As described above, the touch-panel-integrated liquid crystal display device 400 of the present embodiment is provided with an optical sensor element 30 in each pixel area. This provides an area sensor. Accordingly, when an input pen touches a specific position on a surface of the liquid crystal panel 20, the optical sensor elements 30 can recognize the position and can input information into the liquid crystal device or execute an intended operation. In this way, in the liquid crystal display device 400 of the present invention, a touch panel function can be attained by the optical sensor elements 30.

Note that in the present invention, it is not necessarily required to provide an optical sensor element in each one pixel but an optical sensor may be provided in, for example, each pixel having a color filter of R, each pixel having a color filter of G, or each pixel having a color filter of B.

Further, though not shown in Fig 8, as in the liquid crystal display device 100, the liquid crystal display device 400 is provided with a liquid crystal drive circuit for performing display drive on the liquid crystal panel 20 and an area sensor control section for driving the area sensor.

The liquid crystal display device 400 of the present embodiment includes the reflectance changing section 45. Accordingly, as in the liquid crystal display device 100 of Embodiment 1, when a finger or the like touches a target surface 400a for detection and pressure is applied on the target surface 400a, a reflectance of light from the backlight 10 lowers. This makes it possible to more precisely distinguish whether or not a finger, an input pen, or the like touches a panel surface, as compared to a conventional liquid crystal display device including an area sensor.

However, there may occur a problem even in the configuration including the reflectance changing section 45. That is, in a case where a reflectance of an object that touches the target surface 400a for detection is high, a sufficient difference may not be produced between a light intensity detected by optical sensor elements 30 in an area where the object touches the panel surface and a light intensity detected by optical sensor elements in an area where no object touches the panel surface. This may deteriorates detection sensitivity regarding whether the panel surface is touched or not. In other words, sensitivity of the optical sensor elements varies depending on a light reflectance of an inputting object such as a finger, an input pen, or the like. For example, if the inputting object is made of a material such as metal that has a high reflectance, a reflectance in a case where the inputting object touches the panel surface is not decreased significantly as compared to a reflectance in a case where the inputting object does not touch the panel surface.

In order to solve this problem, in the liquid crystal display device 400 of the present embodiment, the 1/4λ phase plate 90 is provided above (i.e. on an image display surface side of) the front polarizing plate 40a. This reduces reflected light from the inputting object such as a finger, an input pen, or the like, and thereby solves the problem such that the reflectance of the inputting object influences the detection sensitivity of the optical sensor elements.

Fig. 9 illustrates a positional relation between a transmission axis C of the front polarizing plate 40a and a slow axis D of the 1/4λ phase plate 90. As shown in Fig. 9, the transmission axis C of the front polarizing plate 40a is positioned so as to be inclined at an angle of 45° with respect to the slow axis D of the 1/4λ phase plate 90.

Fig. 11 illustrates polarization states of light in a case where the front polarizing plate 40a and the 1/4λ phase plate 90 are provided in the positional relation shown in Fig. 9. Note that the polarization states shown in (1), (2), and (3) of Fig. 11 are polarization states of light at respective positions indicated by (1), (2), and (3) in Fig. 10. Fig. 11 schematically shows a state where light (indicated by an arrow) that has been emitted from the backlight 10 and has passed through the 1/4λ phase plate 90 is reflected by an inputting object 180 such as an input pen and then passes back through the 1/4λ phase plate 90.

As shown in (1) of Fig. 11, when the light from the backlight 10 passes through the front polarizing plate 40a having the transmission axis C, the light turns into linearly polarized light polarized in the same direction as a direction of the transmission axis C (this direction is referred to as an x-direction). Then, when this linearly polarized light passes through the 1/4λ phase plate 90, a phase difference of 1 / 4 wavelength occurs. As a result, the linearly polarized light in the x-direction turns into circularly polarized light as shown in (2) of Fig. 11. After this circularly polarized light is reflected by a surface of the inputting object 180, the circularly polarized light passes back through the 1/4λ phase plate 90.

When the circularly polarized light passes back through the 1/4λ phase plate 90, the circularly polarized light turns into linearly polarized light polarized in a y-direction orthogonal to the x-direction as shown in (3) of Fig. 11. Because the transmission axis C of the front polarizing plate 40a is in the x-direction as shown in Fig. 9, the linearly polarized light in the y-direction cannot pass back through the front polarizing plate 40a.

In this way, the reflected light from the inputting object 180 is blocked to some extent, because the 1/4λ phase plate 90 is provided. This makes it possible to prevent such reflected light from being detected by the optical sensor elements 30. Therefore, according to the configuration of the present embodiment, it is possible to reduce an influence of the reflected light from the inputting object 180 such as a finger, an input pen, or the like, on the optical sensor elements. This makes it possible to more precisely distinguish whether or not the inputting object touches the panel surface.

Fig. 12 illustrates a relation of (i) an intersection angle θ between the transmission axis C of the front polarizing plate 40a and the slow axis of the 1/4λ phase plate 90 which are provided in the liquid crystal display device 400 and (ii) a reducing effect on the reflected light from the inputting object 180. In Fig. 12, a vertical axis shows a ratio at which the reflected light from the inputting object 180 reaches the optical sensor elements 30. Moreover, in Fig. 12, a solid line shows a ratio at which the reflected light reaches the optical sensor elements 30 in a case where the inputting object 180 has a mirror surface at a point in contact with the panel surface; a dotted line shows a ratio at which the reflected light reaches the optical sensor elements 30 in a case where mirror reflection and scattered reflection (diffused reflection) mixedly occurs at the point in contact with the panel surface; and a dashed line shows a ratio at which the reflected light reaches the optical sensor elements 30 in a case where only scattered reflection (diffused reflection) occurs at the point in contact with the panel surface.

Among the reflected light from the inputting object 180, light blocked in the configuration of the present embodiment is a light component subjected to mirror reflection. Light subjected to scattered reflection is not blocked in the configuration.

Therefore, in a case where the reflected light from the inputting object 180 has only a light component subjected to mirror reflection (a case indicated by the solid line in Fig. 12), the reflected light is completely blocked when the intersection angle θ of the transmission axis C and the slow axis D is 45°. As a result, in such a case, no reflected light reaches the optical sensor elements 30. The further the intersection angle θ deviates from the angle of 45°, the lower a blocking ratio of the reflected light becomes.

On the contrary, in a case where the reflected light from the inputting object 180 includes only a light component subjected to scattered reflection (a case indicated by the dashed line of Fig. 12), the reflected light from the inputting object is not reduced regardless of a value of the intersection angle θ. Such a case includes a case where the inputting object 180 is paper or the like.

Meanwhile, in a case where mirror reflection and scattered reflection mixedly occur, a reducing effect obtained is at a level between levels of respective reducing effects in the above-described two cases. This case is indicated by the dotted line in Fig. 12,

Note that the case where mirror reflection and scattered reflection mixedly occur as shown by the dotted line of the Fig. 12 includes a case where the inputting object 180 is a finger, for example. In this case, an expectable level of the reducing effect on the reflected light is approximately 50% of the level of the reducing effect of the case where only mirror reflection occurs. Further, in a case where the inputting object 180 is made of metal, an expectable level of the reducing effect on the reflection light is slightly higher than that of the case where the inputting object 180 is a finger.

Note that an arrangement that has the above positional relation of the front polarizing plate 40a and the 1/4λ phase plate 90 is one preferable example of the present invention. However, the present invention is not limited to such a configuration. As long as the slow axis D of the 1/4λ phase plate 90 is positioned so as to be inclined to a certain extent with respect to the transmission axis C of the front polarizing plate 40a (that is, the slow axis D is not parallel to the transmission axis C) and the slow axis D is not orthogonal to the transmission axis C, the reflected light from the inputting object 180 can be reduced. In addition, the closer this inclination angle (intersection angle θ) approaches to an angle of 45°, the more the reflected light can be reduced.

Therefore, preferably, the inclination angle of the slow axis D with respect to the transmission axis C is in a range of 23° (45° - 22°) to 67° (45° + 22°). This makes it possible to obtain at least 50% of an effect of the 1/4λ phase plate 90 in a case where the reflected light is a light component subjected to mirror reflection, as shown in Fig. 12.

Further, preferably, the inclination angle of the slow axis D with respect to the transmission axis C is at 45°. This makes it possible to reliably block the light component subjected to mirror reflection from the inputting object, as shown in Fig. 12.

Further, according to the above configuration, the 1/4λ phase plate 90 is positioned on a top surface of the liquid crystal display device 400. This makes it possible to prevent the occurrence of a problem such that, for example, when a screen is viewed through polarized sunglasses, a screen display becomes invisible because the transmission axis of the front polarizing plate 40a becomes orthogonal to a transmission axis of the polarized sunglasses.

Further, because the 1/4λ phase plate 90 is provided, it is possible to prevent that an image displayed on the liquid crystal panel 20 is reflected by the panel surface 400a and shown (i.e. reflected) on the substrate on which the optical sensor elements 30 are provided and that the optical sensor elements 30 recognizes the image thus reflected. This point is explained below, with reference to Figs. 13 to 15.

(a) of Fig. 13 illustrates a state of interface reflection of light having exited from a liquid crystal panel at a panel surface in a liquid crystal display device to which no 1/4λ phase plate is provided. Fig. 14 schematically illustrates a relation between an image displayed on the liquid crystal panel and an image recognized by an area sensor in the liquid crystal display device to which no 1/4λ phase plate is provided.

As shown in (a) of Fig. 13, in a case where no 1/4λ phase plate is provided, a part of the light having exited from the liquid crystal panel 20 turns into linearly polarized light when the part of the light passes through the front polarizing plate 40a having a transmission axis in a predetermined direction. The linearly polarized light is polarized in the same direction (this direction is referred to as a y-direction) as the predetermined direction of the transmission axis (See (1) of (c) of Fig. 13). Here, the part of the light from the liquid crystal panel 20 is subjected to interface reflection at the panel surface 400a due to a difference between a refractive index of a constituent material of the panel surface and a refractive index of the air. Then, the light subjected to the interface reflection at the panel surface passes straight back through the front polarizing plate 40a and returns back to the liquid crystal panel 20. This is because the light subjected to the interface reflection stays as polarized light parallel to the transmission axis of the front polarizing plate 40a (See (1) of (c) of Fig. 13).

Therefore, when the liquid crystal panel 20 displays a black-and-white image as shown in a top drawing of (a) of Fig. 14, luminance distribution corresponding to the display is produced (See a drawing in the middle of (a) of Fig. 14). This produces variation corresponding to the luminance distribution in intensity of the light that has been subjected to the interface reflection at the panel surface 400a and that then returns back to the liquid crystal panel (See a drawing at the bottom of (a) of Fig. 14).

As a result, the optical sensor elements 30 provided in the liquid crystal panel 20 recognizes a display image as shown in a top drawing of (b) of Fig. 14 and this display image is provided as sensor outputs (See (b) of Fig. 14).

Meanwhile, in the present embodiment, the 1/4λ phase plate 90 is disposed above the front polarizing plate 40a. In this configuration, as shown in (b) of Fig. 13, among the linearly polarized light (See (1) of (c) of Fig. 13) in the y-direction having passed through the front polarizing plate 40a, light subjected to interface reflection at the panel surface 400a is converted to polarized light (See (3) of (c) of Fig. 13) in a direction that is orthogonal to the transmission axis of the front polarizing plate 40a due to an effect of the 1/4λ phase plate 90 (See (2) of (c) of Fig. 13). Therefore, the light subjected to the interface reflection at the panel surface 400a never returns back into the liquid crystal panel 20.

Accordingly, even in a case where the liquid crystal panel 20 displays a black-and-white image as shown in a top drawing of (a) of Fig. 15 and luminance distribution is produced in accordance with the display as shown in a drawing in the middle of (a) of Fig. 14, intensity of light that enters the liquid crystal panel 20 does not depend on this luminance distribution (See a drawing at the bottom of (a) of Fig. 15).

As a result, as shown in a top drawing of (b) of Fig. 15, an image displayed on the liquid crystal panel 20 is not shown on the optical sensor elements 30 provided within the liquid crystal panel 20. Consequently, the sensor outputs do not depend on the displayed image (See a drawing at the bottom of (b) of Fig. 15).

As described above, according to the liquid crystal display device of the present embodiment, it is possible to reduce recognition of display contents on the liquid crystal panel by the optical sensor elements. Therefore, more precise position detection can be performed.

Note that, though the above Embodiment 2 describes, as an example, a configuration where the 1/4λ phase plate is provided above the front polarizing plate (that is, on an image display surface side), the present invention is not limited to the configuration. The present invention encompasses a configuration where a ((1/2) × n + 1/4) wave plate (here, n is an integer equal to or more than 0) is provided above (i.e. on an image display surface side of) the front polarizing plate.

### [Embodiment 3]

The following explains Embodiment 3 of the present invention, with reference to Fig. 16. Note that the present invention is not limited to this.

Embodiment 1 above explains a touch-panel-integrated liquid crystal display device having an area sensor function (specifically, a touch panel function). Now Embodiment 3 explains an area sensor that is not integrated with a display device.

Fig. 16 shows an area sensor 80 that has a touch panel function. In the touch panel function, a plurality of optical sensor elements 84 provided on a substrate 81 detects an image on a target surface 80a for detection so that an input position is detected.

As shown in Fig. 16, the area sensor 80 includes a substrate 81 (position detecting section) including the plurality of optical elements 84, and a light emitting section 82 provided on a backside of the substrate 81. The light emitting section 82 illuminates the substrate. Each of the plurality of optical sensor elements 84 is made of a photodiode or a phototransistor. The optical sensor element 84 causes a current flow in accordance with strength of light received, thereby detecting an intensity of the light received. Such optical sensor elements can be formed according to a method for producing a conventionally known area sensor.

Further, the area sensor 80 is provided with an area sensor control section 70 for driving the area sensor. As shown in Fig. 16, the area sensor control section 70 includes a timing generating circuit 71, an area sensor drive circuit 72, an area sensor reading circuit 73, a coordinate extracting circuit 74, and an interface circuit 75. A configuration of the area sensor control section may be the same as a configuration described in Embodiment 1 above or a conventionally known configuration, and therefore a detailed explanation thereof is omitted.

The area sensor 80 has the above-described configuration. Accordingly, when a finger or an input pen touches the target surface 80a for detection, the optical sensor elements 84 formed on the substrate 81 recognizes the finger or the input pen as an image. This makes it possible to detect an input position.

Further, the area sensor 80 of the present embodiment is provided with a reflectance changing section 83 that is formed on the substrate 81. To a specific configuration of the reflectance changing section 83, a configuration of a reflectance changing section described in Embodiment 1 can be applied, and therefore a detailed explanation thereof is omitted.

According to the above configuration, when a finger, an input pen, or the like touches the target surface 80a for detection and pressure is applied on the target surface 80a, a reflectance of light from the light emitting section 82 varies. This makes it possible to precisely detect whether or not a finger or an input pen touches the target surface 80a for detection.

That is, in the area sensor 80 of the present embodiment, as indicated by an arrow B in Fig. 16, a part of the light from the backlight 82 is reflected within reflectance changing section 83 in an area where a finger or the like does not touches the target surface 80a for detection. Meanwhile, as indicated by an arrow A in Fig. 16, much light among the light from the backlight 82 is transmitted in an area where a finger or the like touches the target surface 80a for detection. Accordingly, in such an area, a reflectance lowers. As a result, as compared to a conventional area sensor, it becomes possible to more precisely distinguish whether or not a finger, an input pen or the like touches a panel surface.

Further, another example of the area sensor of the present invention is configured to include a front polarizing plate and a 1/4λ phase plate as described in Embodiment 2.

In this case, for example, the area sensor 80 can be configured to include a front polarizing plate 40a described in Embodiment 2 on an upper surface of the reflectance changing section 83 and further include a 1/4λ phase plate 90 on an upper surface of the front polarizing plate 40a. This configuration makes it possible to more precisely distinguish whether or not an inputting object such as a finger, a pen, or the like touches a target surface for detection.

### [Embodiment 4]

The following explains Embodiment 4 of the present invention, with reference to Fig. 17. Note that the present invention is not limited to this.

Embodiment 3 above explains an area sensor including a light emitting section 82 provided on a backside of a substrate 81. Here, Embodiment 4 explains an area sensor that is not provided with any light emitting section.

Fig. 17 illustrates a configuration of an area sensor 500 of Embodiment 4. Note that members of the area sensor 500 given the same reference numerals as the members described for the above described area sensor 80 (See Fig. 16) respectively have identical functions and the explanations thereof are omitted as appropriate.

The area sensor 500 shown in Fig. 17 has a touch panel function. In the touch panel function, a plurality of optical sensors 84 provided on a substrate 81 detects an image on a target surface 80a for detection and thereby an input position is detected.

As shown in Fig. 17, the area sensor 500 includes the substrate 81 (a position detecting section) including the plurality of optical sensor elements 84. The optical sensor elements 84 have the same configuration as those of the area sensor 80 in Embodiment 3 described above.

Further, the area sensor 500 includes an area sensor control section 70 for driving the area sensor. As shown in Fig. 17, the area sensor control section 70 includes a timing generating circuit 71, an area sensor drive circuit 72, an area sensor reading circuit 73, a coordinate extracting circuit 74, and an interface circuit 75. A configuration of the area sensor control section may be the same as a configuration of Embodiment 3 described above, and therefore a detailed explanation thereof is omitted.

The area sensor 500 has the configuration described above. Accordingly, when a finger or an input pen touches the target surface 80a for detection, the optical sensor elements 84 that are formed on the substrate 81 recognizes the finger or the input pen as an image, and thereby an input position can be detected.

Further, the area sensor 500 includes a reflectance changing section 83 that is formed on the substrate 81. To a specific configuration of the reflectance changing section 83, a reflectance changing section described in Embodiment 1 can be applied.

However, the area sensor 500 is not provided with a light emitting section. Therefore, the reflectance changing section 83 of the present embodiment changes not a reflectance of light emitted from a light emitting section but a reflectance of external light entering the area sensor 500 from a backside (that is, a side opposite to the target surface 80a for detection) of the area sensor 500.

According to the above configuration, when a finger, an input pen, or the like touches the target surface 80a for detection and pressure is applied on the target surface 80a for detection, a reflectance of light changes. This makes it possible to precisely detect whether or not a finger or an input pen touches the target surface 80a for detection.

In other words, in the area sensor 500 of the present embodiment, in an area where a finger or the like does not touch the target surface 80a for detection, a part of the external light entering the area sensor 500 from the backside is reflected, as indicated by an arrow B in Fig. 17, within the reflectance changing section 83. Meanwhile, in an area where a finger or the like touches the target surface 80a for detection, much light among the external light entering the area sensor 500 from the backside is transmitted as shown by an arrow A in Fig. 17. Accordingly, in such an area, a reflectance lowers. As a result, as compared to a conventional area sensor, it becomes possible to more precisely distinguish whether or not a finger, an input pen, or the like touches a panel surface.

The area sensor 500 of the present embodiment does not include a light emitting section. Therefore, for example, in a case where the area sensor 500 is attached to a window glass or the like and used, external light entering the window glass can be utilized as a light emitting section.

The present invention is not limited to the description of the embodiments above, but may be altered by a skilled person within the scope of the claims. An embodiment based on a proper combination of technical means disclosed in different embodiments is encompassed in the technical scope of the present invention.

An area sensor of the present invention includes: a position detecting section including a plurality of optical sensor elements detecting an intensity of light received, the position detecting section detecting an input position by causing the plurality of optical sensor elements to detect an image on a target surface for detection; a light emitting section illuminating the position detecting section from a backside of the position detecting section; and a reflectance changing section changing a reflectance of light from the light emitting section in response to application of pressure onto the target surface for detection.

Further, a display device of the present invention includes a display panel including an area sensor of the present invention.

A liquid crystal display device of the present invention includes: a position detecting section including a plurality of optical sensor elements detecting an intensity of light received, the position detecting section detecting an input position by causing the plurality of optical sensor elements to detect an image on a surface of a liquid crystal panel; and a reflectance changing section changing a reflectance of light from the backlight in response to application of pressure onto the surface of the liquid crystal panel.

Therefore, according to the present invention, because a reflectance changing section is provided, a reflectance of light from a backlight can be changed depending on whether or not pressure is applied on a panel surface. This makes it possible to precisely distinguish whether or not a finger, an input pen, or the like touches the panel surface.

The embodiments and concrete examples of implementation discussed in the foregoing detailed explanation serve solely to illustrate the technical details of the present invention, which should not be narrowly interpreted within the limits of such embodiments and concrete examples, but rather may be applied in many variations within the spirit of the present invention, provided such variations do not exceed the scope of the patent claims set forth below.

### Industrial Applicability

The present invention can be suitably applied to a display device having an area sensor function.

## Claims

1. An area sensor detecting an input position of an external input by detecting an image on a target surface for detection, the area sensor comprising:
a position detecting section including a plurality of optical sensor elements detecting an intensity of light received, the position detecting section detecting the input position by causing the plurality of optical sensor elements to detect the image on the target surface for detection; and
a reflectance changing section changing a reflectance of light in response to application of pressure onto the target surface for detection.

2. The area sensor as set forth in claim 1, wherein:
the reflectance changing section lowers the reflectance in response to the application of the pressure.

3. The area sensor as set forth in claim 2, wherein:
the reflectance changing section is formed by using a lamination layer including an elastic film and a transparent flat plate substrate.

4. The area sensor as set forth in claim 3, wherein:
the elastic film includes protrusions and depressions formed on a surface of the elastic film, the surface being to come in contact with the transparent flat plate substrate.

5. The area sensor as set forth in claim 3, wherein:
the elastic film includes protrusions and depressions formed on a surface of the elastic film, the surface being opposite to another surface of the elastic film to come in contact with the transparent flat plate substrate.

6. The area sensor as set forth in any one of claims 1 to 5, further comprising:
a light emitting section illuminating the position detecting section from a backside of the position detecting section.

7. A display device comprising a display panel including the area sensor as set forth in any one of claims 1 to 6.

8. A liquid crystal display device including a liquid crystal panel provided with a liquid crystal layer between an active matrix substrate and a counter substrate, the liquid crystal display device having an area sensor function for detecting an input position of an external input by detecting an image on a surface of the liquid crystal panel, the liquid crystal display device comprising:
a position detecting section including a plurality of optical sensor elements detecting an intensity of light received, the position detecting section detecting the input position by causing the plurality of optical sensor elements to detect the image on the surface of the liquid crystal panel; and
a reflectance changing section changing a reflectance of light in response to application of pressure onto the surface of the liquid crystal panel.

9. The liquid crystal display device as set forth in claim 8 further comprising:
a backlight illuminating the liquid crystal panel,
wherein the reflectance changing section changes a reflectance of light from the backlight.

10. The liquid crystal display device as set forth in claim 9 wherein:
the reflectance changing section lowers the reflectance in response to the application of the pressure.

11. The liquid crystal display device as set forth in claim 10, wherein:
the liquid crystal panel is provided between two polarizing plates disposed so as to be opposed to each other;
the reflectance changing section is formed by using a laminated layer including an elastic film and one of the two polarizing plates, the one polarizing plate being provided on an image display surface side; and
the elastic film is disposed between the liquid crystal panel and the one polarizing plate.

12. The liquid crystal display device as set forth in claim 11, wherein:
the elastic film includes protrusions and depressions formed on a surface of the elastic film, the surface being to come in contact with the polarizing plate.

13. The liquid crystal display device as set forth in claim 11, wherein:
the elastic film includes protrusions and depressions formed on a surface of the elastic film, the surface being opposite to another surface of the elastic film to come in contact with the polarizing plate.

14. The liquid crystal display device as set forth in any one of claims 11 to 13, further comprising:
a ((1/2) × n + 1/4) wave plate (n is an integer equal to or mote than 0) on a surface of the one polarizing plate, the surface of the one polarizing plate being on the image display surface side.

15. The liquid crystal display device as set forth in claim 14, wherein:
the ((1/2) × n + 1/4) wave plate is disposed so that a slow axis of the ((1/2) × n + 1/4) wave plate is inclined at an angle of 45° with respect to a polarizing transmission axis of the one polarizing plate provided on the image display surface side.
